**Europäisches Patentamt**

**European Patent Office**

**Office européen des brevets**

(19)

(11) Veröffentlichungsnummer: **0 181 615**
**B1**

(12) **EUROPÄISCHE PATENTSCHRIFT**

(45) Veröffentlichungstag der Patentschrift: **02.05.90**

(51) Int. Cl.⁵: **C 05 F 7/00, C 05 F 9/00**

(21) Anmeldenummer: **85114214.1**

(22) Anmeldetag: **07.11.85**

(54) **Verfahren und Anlage zur Entsorgung und Verwertung von Klärschlamm und Biomüll.**

(30) Priorität: **08.11.84 DE 3440754**

(43) Veröffentlichungstag der Anmeldung:
**21.05.86 Patentblatt 86/21**

(45) Bekanntmachung des Hinweises auf die
Patenterteilung:
**02.05.90 Patentblatt 90/18**

(84) Benannte Vertragsstaaten:
**AT BE CH FR GB IT LI NL SE**

(56) Entgegenhaltungen:
**DE-A-1 467 384**
**FR-A-2 148 083**

(73) Patentinhaber: **Abel, Günther**
**Herrenkellergasse 18**
**D-7900 Ulm (DE)**

(73) Patentinhaber: **Seefelder, Josef**
**Marktstrasse 20**
**D-8965 Wertach/Allgäu (DE)**

(72) Erfinder: **Abel, Günther**
**Herrenkellergasse 18**
**D-7900 Ulm (DE)**
Erfinder: **Seefelder, Josef**
**Marktstrasse 20**
**D-8965 Wertach/Allgäu (DE)**

(74) Vertreter: **Rehberg, Elmar, Dipl.-Ing.**
**Postfach 3162 Am Kirschberge 22**
**D-3400 Göttingen (DE)**

Courier Press, Leamington Spa, England.

EP 0 181 615 B1

**Beschreibung**

Die Erfindung bezieht sich auf ein Verfahren zur Entsorgung und Verwertung von Rechengut, Schwimmstoffen aus Gerinnen und Klärschlamm aus Absetzbecken und Belüftungsbecken von Kläranlagen einerseits und Biomüll von Haushalt, Industrie usw. andererseits und zur Erzeugung von Kompost. Es wird eine Anlage zur Durchführung des Verfahrens aufgezeigt, die einen Rechen zum Abschalten von Rechengut und einen Voreindicker für Klärschlamm aufweist.

Aus der Zeitschrift "wasser luft und betrieb 19 (1975), Nr. 10", S. 588 bis 591 ist ein Verfahren für das Kompostieren von Müll und Klärschlamm bekannt, bei dem der Müll zunächst zerkleinert und aufbereitet wird, bevor ihm Klärschlamm hinzugefügt wird. Das bekannte Verfahren geht von der Müllverarbeitung aus und benutzt Klärschlamm nur gleichsam aus Zusatzmittel. Nach dem Zerkleinern und Sortieren des Mülls erfolgt das Mischen des aufbereiteten Mülls mit bereits entwässertem Klärschlamm, wobei es offen bleibt, auf welche Art und Weise diese Entwässerung stattgefunden hat. Anschließend wird das Müll-Klärschlamm-Gemisch gepresst und palettiert. Schließlich erfolgt eine Intensivrotte. Im Gegensatz dazu geht das vorliegende Verfahren vom Klärschlamm aus und ist im wesentlichen darauf gerichtet, eine Klärschlammkompaktierung zu erreichen, bei der auch Biomüll geschickt eingesetzt wird.

Der Erfindung liegt die Aufgabe zugrunde, bei dem Verfahren der eingangs beschriebenen Art Klärschlamm auf ca. 50% Feststoffgehalt zu entwässern. Daneben soll auch Biomüll entsorgt und brauchbarer Kompost erzeugt werden.

Erfindungsgemäß wird dies bei dem Verfahren der eingangs beschriebenen Art dadurch erreicht, daß die Schwimmstoffe feinabgeschieden werden, daß der Biomüll sowie rückgeführte Biomasse und Rechengut den abgeschiedenen Schwimmstoffen hinzugefügt werden, daß die so gebildete Mischmasse zerkleinert, kompaktiert und dabei entwässert wird, daß einem Teil der kompaktierten Mischmasse der Klärschlamm hinzugefügt wird und so die rückzuführende Biomasse gebildet wird, und daß der andere Teil der Mischmasse unter Förder-Durchmischung in den Kompost überführt wird. Die Erfindung nutzt in geschickter Weise den Biomüll, das Rechengut und die Schwimmstoffe dazu aus, um Klärschlamm auf einen Feststoffgehalt von ca. 50% zu entwässern, wobei der zerkleinerte Biomüll, das Rechengut und die Schwimmstoffe gleichsam als Filtermaterial benutzt werden. Rechengut, zerkleinerter Biomüll und rückgeführte Biomasse werden den feinabgeschiedenen Schwimmstoffen hinzugefügt. Die auf diese Weise gebildete Mischmasse läßt sich auf ca. 50% Feststoffanteil kompaktieren. Diese Mischmasse wird in zwei Teile geteilt. Der eine Teil wird mit Klärschlamm gemischt, so daß daraus Biomasse entsteht, die entgast und dabei teilentwässert wird. Die entgaste Biomasse wird rückgeführt und gelangt als Bestandteil in die Mischmasse wie auch das Rechengut und der Biomüll und die Schwimmstoffe. Der andere Teil der Mischmasse aus Rechengut, Schwimmstoffen, Biomüll und rückgeführter Biomasse wird im Kompostierraum zu Kompost weitergearbeitet. Es versteht sich, daß der Klärschlamm z.B. in einem Eindicker bereits vorentwässert werden kann. Als Klärschlamm wird Frischschlamm (ca. 3—8%) oder auch Belebtschlamm (ca. 0,5—1,5%) mit 0,5 bis 8% Feststoffgehalt eingesetzt.

Die Biomasse wird zunächst auf etwa 75°C. erwärmt und dabei entwässert, bevor sie mit dem Rechengut und dem zerkleinerten Biomüll gemischt wird. Die Biomasse entsteht aus Mischmasse und Klärschlamm und wird in einer Mischeinrichtung zusammengefügt Die Erwärmung auf 75°C. geschieht unter Zufuhr von Energie, die an anderer Stelle aus dem Verfahren entnomen werden kann.

Die rückgeführte Biomasse wird zusammen mit dem Rechengut, den Schwimmstoffen und dem Biomüll auf etwa 50% Feststoffgehalt kompaktiert, so daß diese Mischmasse zur Kompostherstellung geeignet ist. Die kompaktierte Mischmasse wird im Kompostierraum auf 75°C. erwärmt. Dies geschieht unter Zufuhr von Luft, wobei die Erwärmung durch die bakterielle Bearbeitung erfolgt und aus dieser Verfahrensstufe noch Wärme für die Entgasung des anderen Teils der Mischmasse gewonnen werden kann.

Die Anlage zur Durchführung des Verfahrens arbeitet mit einem Rechen zum Abscheiden von Rechengut und einem Voreindicker für Klärschlamm, wie sie hinreichend bekannt sind. Es sind jedoch ein Feinabscheider für Schwimmstoffe, eine erste Misch- und Zerkleinerungseinrichtung für Rechengut, die abgeschiedenen Schwimmstoffe, Biomüll und rückgeführte Biomasse, eine Kompostiereinrichtung für die so gebildete Mischmasse, eine zweite Mischeinrichtung für einen Teil der Mischmasse aus der Kompaktiereinrichtung mit Klärschlamm, eine der zweiten Mischeinrichtung nachgeschaltete Förderschnecke zur Erzeugung der Biomasse und eine der Kompaktiereinrichtung nachgeschaltete Förderschnecke für die Verrottung der Mischmasse zu Kompost vorgesehen. Die erste Mischeinrichtung dient zur Erzeugung der Mischmasse, während die zweite Mischeinrichtung zur Bereitstellung der Biomasse dient.

Von besonderer selbstständiger Bedeutung ist der Feinabscheider. Dieser weist eine trommelartige Siebwand auf, die auf der Außenseite ein Gewinde und auf der Innenseite umlaufende Nuten oder umgekehrt trägt, die sich radial zur Bildung von Durchtrittsschlitzen überlappen. Es werden also immer auf der einen Seite Nuten und auf der anderen Seite ein Gewinde miteinander kombiniert, so daß im Bereich der radialen Überlappung Durchtrittsschlitze an der trommelartigen Siebwand entstehen. Die Siebwand besteht somit aus einem zusammenhängenden Teil und läßt sich relativ leicht herstellen. In den Nuten oder dem Gewinde kann ein umlaufend angetriebener Kamm vorgesehen sein, der die bei der Herstellung der Nuten bzw. des Gewindes eingesetzten Drehstähle aufweist. Der Kamm dient somit sowohl der Herstellung der Siebwand als auch dem Betrieb des Feinabscheiders, so daß der Kamm durch radiale Verstellung beliebig nahe an die Durchtrittsschlitze angestellt werden kann, so daß eine Feinabscheidung in bisher nicht bekanntem Ausmaße auftritt. Durch diese Feinabscheidung wird die nachfolgende Kläranlage mengenmäßig erheblich entlastet. Es versteht sich, daß die trommelartige Siebwand einerseits und der Kamm andererseits relativ zueinander bewegt werden müssen. Entweder steht das eine Teil still und das andere Teil wird angetrieben oder es werden beide Teile mit Relativgeschwindigkeit zueinander angetrieben. Vorteilhaft ist es, wenn der Kamm in den Nuten angestellt wird, weil er dann axial immer an derselben Stelle bleibt. Es ist aber auch möglich, den Kamm im Gewinde arbeiten zu lassen. Dann muß eine axial bewegliche Führung für den Kamm vorgesehen sein. Die Nut bzw. das Gewinde an der trommelartigen Siebwand können gestuft ausgebildet sein, so daß in Durchtrittsrichtung sich verjüngende Durcmtrittsschlitze entstehen, so daß eine unterschiedliche Abscheidewirkung erreicht wird. Der Antrieb des Kamms kann auch intermittierend erfolgen, so daß die sich absetzenden Schwimmstoffe zumindest zeitweise dazu benutzt werden, um weitere Schwimmstoffe an ihnen bzw. mit ihrer Hilfe abzuscheiden. Der besondere Vorteil dieses Feinabscheiders liegt darin, daß er vergleichsweise einfach herstellbar ist und sich Herstellungstoleranzen nicht nachteilig auswirken können, weil der Kamm einerseits als Werkzeug bei der Herstellung und andererseits als Werkzeug bei der Abnahme der Schwimmstoffe eingesetzt wird. Die Durchtrittsrichtung des Schwimmstoff-Wassergemisches relativ zur trommelartigen Siebwand kann einmal von innen nach außen erfolgen. Es versteht sich, daß dann auch der Kamm auf der Innenseite angeordnet ist. Es ist aber auch möglich, den Zulauf auf den äußeren Umfang aufzugeben und den Ablauf aus dem Innenraum der trommelartigen Siebwand heraus zu bilden. Dabei wird zweckmäßig die Oberfläche auf der Außenseite aufgerauht, so daß bei bewegter Siebwand eine Ablagerung der Schwimmstoffe auf der äußeren Oberfläche erfolgt. Der Kamm kann dann ortsfest angeordnet werden, so daß die drehende Siebwand zu einer Abscheidung der Schwimmstoffe an dem Kamm führt.

In dem Feinabscheider kann eine Mischschnecke vorgesehen sein, die über die axiale Länge des Feinabscheiders hinaus verlängert ist und als Kompaktiereinrichtung in einem konischen Kompaktierkopf endet, wobei im Bereich des verlängerten Teils eine Aufgabeeinrichtung für Rechengut, Biomüll und rückgeführter Biomasse vorgesehen ist. Besonders sinnvoll ist es, wenn die Mischschnecke als Doppelschnecke ausgebildet ist und gegenläufig angetrieben wird, so daß dabei eine besonders gute Durchmischung der Bestandteile der Mischmasse erreicht wird. Die Mischschnekke oder die Mischschnecken sind auf ihrer Unterseite halbseitig abgedeckt, so daß von oben zu mischendes Gut zugeführt werden kann und trotzdem eine Weiterbeförderung der Mischmasse entsteht. Die Mischschnecke bzw. die Mischschnecken arbeiten dabei immer mit Scher- und Führungsleisten zusammen, so daß auch bereits in diesem Teil der Vorrichung eine Entwässerung stattfindet. Die beiden Mischschnecken enden in einer konisch ausgebildeten Kompaktiereinrichtung, die eine Verdichtung, Zerkleinerung und damit eine Entwässerung bewirkt, so daß hier ca. 50% Feststoffanteil in der Mischmasse entstehen.

Dem Kompaktierkopf kann eine schräg ansteigend angeordnete Förderschnecke als Kompostiereinrichtung nachgeschaltet sein, die mit einer Einrichtung zum Einbringen von Luft versehen ist. Durch die bakterielle Zersetzung wird die Mischmasse auf cy. 75°C. erwärmt. Auch in dieser Förderschnecke sind Scher- und Führungsleisten angeordnet, die mit den Schneckenwendel zusammenarbeiten, so daß auch hier eine Durchmischung stattfindet. Die Belüftungseinrichtung sorgt für den notwendigen Sauerstoff. Auf diese Art und Weise wird relativ kurzzeitig, beispielsweise bei einem Durchlauf durch die Schnecke von zwei Tagen, brauchbarer Kompost erzeugt. Eine zweite, davon separate Förderschnecke, die ohne Belüftungseinrichtung arbeitet, ist für den Transport und die Entwässerung der Biomasse aus der Mischmasse und dem Klärschlamm vorgesehen. In dieser Schnecke findet eine Vorentwässerung und Entgasung statt. Es ist aber auch möglich, daß die beiden Schnecken als ein gemeinsames Aggregat ausgebildet sind, wobei die Förderschnecke als Doppelmantelschnecke vorgesehen ist, deren eine Förderstrecke für die Entgasung und Erwärmung des Klärschlamms vermischt mit Mischmasse und deren zweite Förderstrecke als Kompostiereinrichtung für die Mischmasse ausgebildet ist. Die Doppelmantelschnecke weist jeweils einen zweigängigen Schneckengang auf, deren zweiter Durchtrittsraum von einem Wärmeträgermedium durchflossen ist. Es versteht sich, daß die auf diese Weise gebildeten beiden Durchtrittsräume unterschiedlich groß gestaltet sind, wobei der größere Durchtrittsraum für die Biomasse bzw. die Mischmasse bestimmt ist und der kleinere Durchtrittsraum für das Wärmeträgermedium bestimmt ist. Am Ende der ersten Förderstrecke für den Klärschlamm vermischt mit Mischmasse kann eine Ausführeinrichtung für die Rückführung der so gebildeten Biomasse zu der verlängerten Mischschnecke vorgesehen sein.

Die Erfindung wird anhand eines bevorzugten Ausführungsbeispiels weiter beschrieben. Es zeigen:

Fig. 1 eine schematisierte Darstellung des wesentlichen Teils der Anlage,

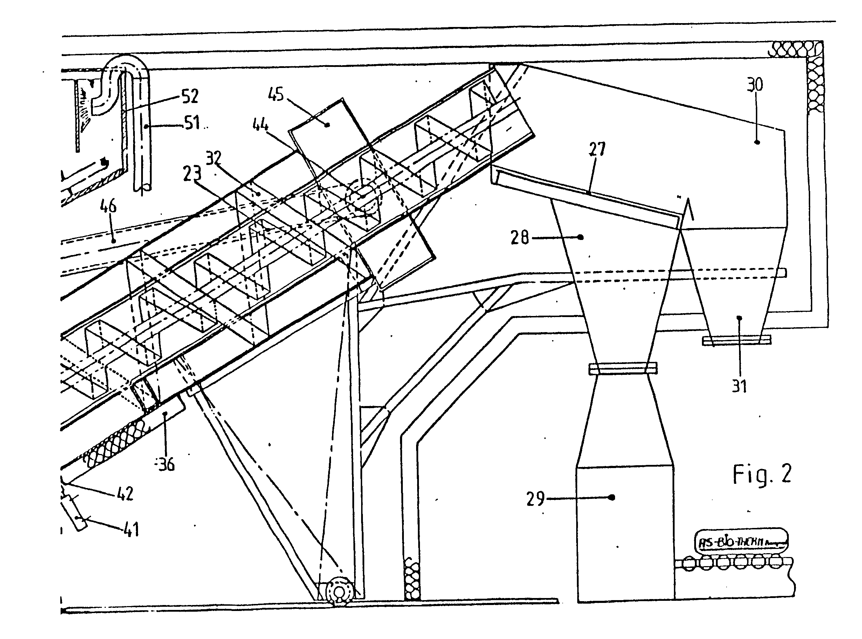

Fig. 2 eine Ergänzungsdarstellung zu Fig. 1,

Fig. 3 einen schematisierten Querschnitt durch den Feinabscheider mit nachgeordneter erster Mischeinrichtung,

Fig. 4 einen Schnitt gemäß der Linie IV—IV in Fig. 3,

Fig. 5 einen Schnitt gemäß der Linie V—V in Fig. 3,

Fig. 6 eine Draufsicht auf die Zerkleinerungseinrichtung gemäß Fig. 5 im Halbschnitt,

Fig. 7 einen Schnitt durch die Kompaktiereinrichtung und

3

Fig. 8 eine Ansicht von Teilen des Antriebes der Kompaktiereinrichtung.

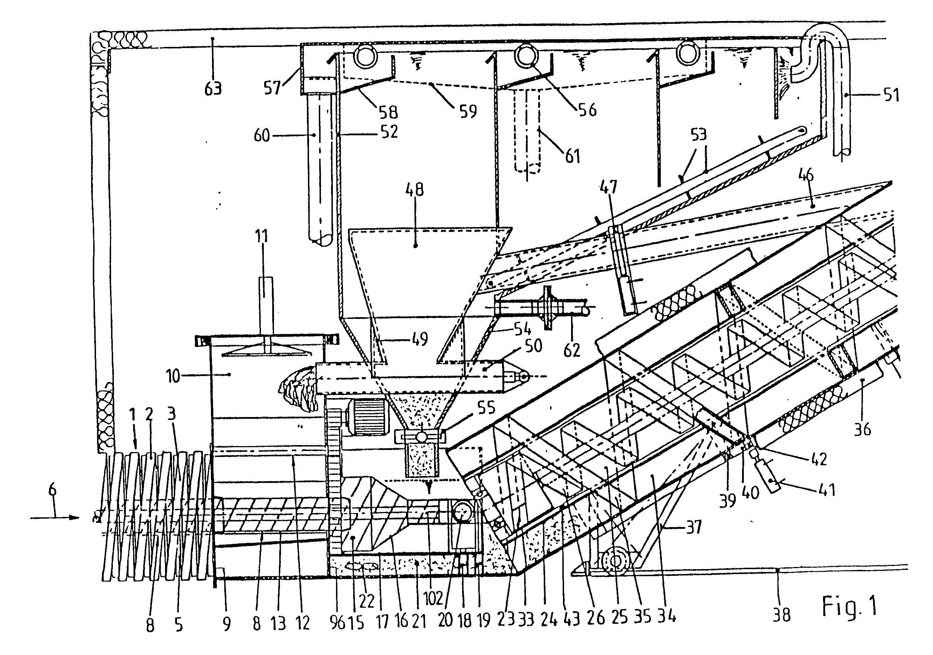

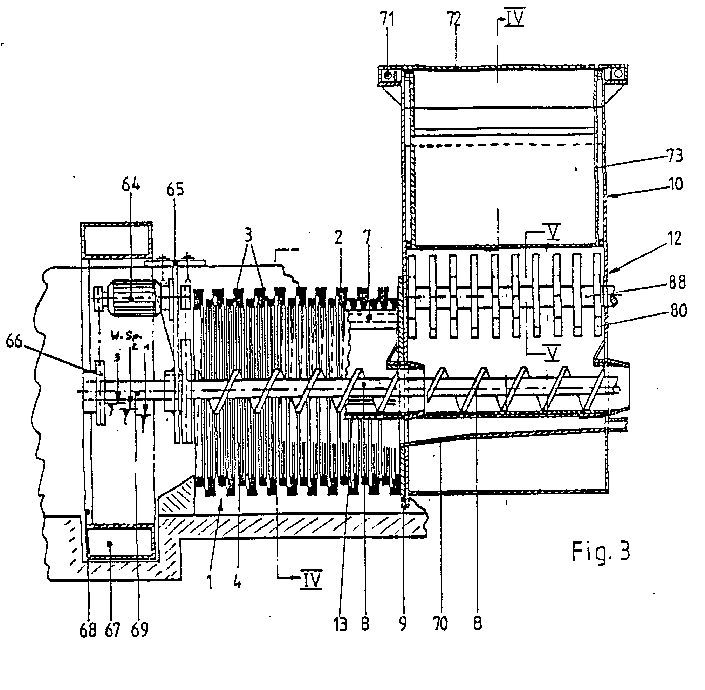

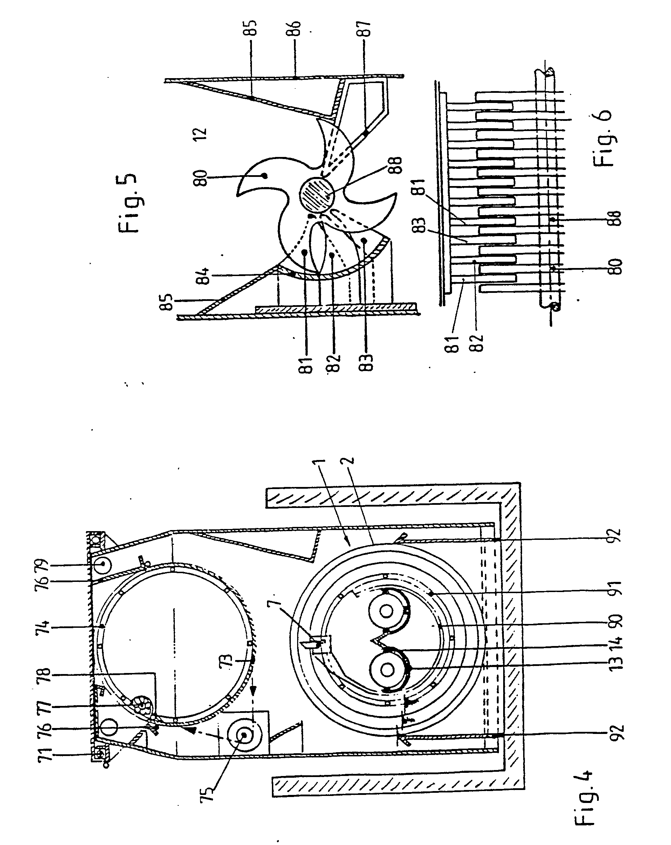

Der in Fig. 1 schematisch dargestellte Feinabscheider 1 weist eine trommelartige Siebwand 2 auf, die stellstehend angeordnet ist. Die Siebwand 2 besitzt auf ihrer Außenseite ein Gewinde 3 und auf ihrer Innenseite umlaufende Nuten 4 (Fig. 3), die einander in radialer Richtung überlappen, so daß Durchtrittsschlitze 5 gebildet sind, die jeweils spitz auslaufen und sich über einen gewissen Winkel des Umfangs jeweils erstrecken. Gemäß Pfeil 6 ist das Gerinne an den Innenraum des Feinabscheiders 1 angeschlossen. Am anderen Ende ist der Feinabscheider 1 weitgehend geschlossen, so daß mit seiner Hilfe Schwimmstoffe abgeschieden werden können. Diese Schwimmstoffe, die sich auf der inneren Oberfläche des Feinabscheiders 1 niederschlagen, werden mit Hilfe eines intermittierend angetriebenen Kamms 7 (Fig. 4) abgeschieden und in eine Mischschnecke 8 abgeworfen, die als Doppelwellenschnecke ausgebildet sein kann und im Bereich des Feinabscheiders 1 koaxial angeordnet ist, dessen endseitigen Abschlußboden 9 durchdringt und hier im Bereich einer ersten Mischeinrichtung 10 fortgesetzt ist. Die Mischeinrichtung 10 dient dazu, um Rechengut, zerkleinerten Biomüll und rückgeführte Biomasse den Schwimmstoffen, die mit der Mischschnecke 8 herantransportiert werden, zuzumischen. Diese Stoffe werden z.B. mit Hilfe einer Preßeinrichtung 11 von oben durch eine Zerkleinerungseinrichtung 12 hindurch (Fig. 5 u. 6) auf die beiden Mischschnecken 8 geworfen, die oben offen ausgebildet sind. Auf etwa der unteren Umfangshälfte sind die Mischschnecken 8 durch Siebbleche 13 abgedeckt, an deren innerem Umfang Scher- und Führungsleisten 14 angeordnet sind, die mit den Wendeln der Förderschnecke zusammenarbeiten. Bereits in diesem Bereich findet eine laufende Vorentwässerung zunächst der Schwimmstoffe im Feinabscheider 1 und sodann der Mischmasse im Bereich der ersten Mischeinrichtung 10 statt. Am Ende der Mischschnecke 8 wird die Mischmasse aus Schwimmstoffen, Rechengut, Biomüll und rückgeführter Biomasse entwässert und weiter verdichtet. Sie gelangt in einen Kompaktierkopf 15, der konisch ausgebildet ist, so daß hierin eine Verdichtung und Entwässerung auf etwa 50% Feststoffgehalt stattfinden kann. Der Kompaktierkopf 15 ist von einem abgeschlossenen Gehäuse 16 umgeben, welches wiederum in einem Behälter 17 vorgesehen ist. Am Ende des Kompaktierkopfes 15 schließt sich eine Verzweigung an, die durch zwei schematisch wiedergegebene Absperrorgane 18 und 19 verdeutlicht ist. Auf diese Art und Weise kann ein Teil der verdichteten Mischmasse über einen Rohranschluß 20 in einen Mischraum 21 gelangen, in den andererseits Klärschlamm eingebracht wird, wie später noch erläutert wird. Über eine Ruhreinrichtung 22 wird die Mischmasse und der Klärschlamm gemischt und es entsteht hieraus Biomasse. Über das Absperrorgan 19 gelangt der andere Teil der Mischmasse in eine schräg ansteigend angeordnete erste Förderschnecke 23, die von einem Rohrmantel 24 umgeben ist. Die Schneckenwendel der ersten Förderschnecke 23 ist doppelgängig ausgebildet, so daß einerseits ein erster Durchtrittsraum 25 für die Mischmasse und ein zweiter Durchtrittsraum 26 für ein Wärmeträgermedium gebildet und vorgesehen sind. Anfangsseitig ist eine nicht dargestellte Belüftungseinrichtung vorgesehen, die zu dem ersten Durchtrittsraum 25 führt, so daß die Mischmasse auf diese Art und Weise immer wieder mit Sauerstoff versorgt werden kann. Hier findet die Kompsotierung der Mischmasse statt. Der Durchlauf durch diese Förderschnecke 23 dauert etwa zwei Tage, so daß am oberen Ende vermittels eines Rüttelsiebes 27 eine Aufteilung des Kompostes erfolgen kann. Über einen Trichter 28 und einer Sacketiereinrichtung 29 kann der in Säcken abgepackte Kompost verkaufsfertig entnommen werden. Über einen zweiten Trichter 30 und einem Auslauf 31 kann der Kompost ebenfalls abgezogen werden.

Der zweite Teil der Mischmasse gelangt in den Mischraum 21, und zwar über den Rohranschluß 20, wo er mit Klärschlamm vermischt wird. Eine zweite Förderschnecke 32 besitzt einen Rohrmantel 33. Die zugehörige Schneckenwendel kann konzentrisch um den Rohrmantel 24 herum angeordnet sein. Sie ist ebenfalls doppelgängig ausgebildet, so daß auch hier wiederum ein erster Durchtrittsraum 34 und ein zweiter Durchtrittsraum 35 geschaffen werden. Der erste Durchtrittsraum 34 ist zur Aufnahme der Mischmasse und des Klärschlamms ausgebildet, aus denen bei der Durchwanderung der zweiten Förderschnecke 32 die Biomasse entsteht. Der Durchtrittsraum 35 dient der Einleitung eines Wärmeträgermediums, um die Biomasse zu beheizen, damit auch hier der für die Hygienisierung erforderliche Temperaturbereich von etwa 75°C. erreicht wird. Die beiden Förderschnecken 23 und 32 können hier als Doppelmantelförderschnecke konzentrisch zueinander angeordnet sein, was für den Wärmehaushalt vorteilhaft ist. Der äußere Rohrmantel 33 ist mit einer Isolierung 36 umgeben. Die Doppelmantelförderschnecke kann auf einem Fahrwerk 37 aufgebaut sein, so daß sie als mobile Einrichtung abwechselnd bei verschiedenen standortgebundenen Kläranlagen eingesetzt werden kann und z.B. von Ort zu Ort auf dem entsprechenden Gelände 38 verfahrbar ist. Ein Drehlager 39, eine Lagerschale 40 und eine Hubeinrichtung 41 sowie ein Zahnkranz 42 vervollständigen die Doppelmantelförderschnecke. Auf der Innenseite des Rohrmantels 24 als auch auf der Innenseite des Rohrmantels 33 sind Scher- und Führungsleisten 43 angeordnet, die mit den Schneckenwendeln zusammenarbeiten, so daß auf diese Art und Weise jeweils eine Entwässerung, Verdichtung und Zerkleinerung bzw. Durchmischung stattfindet.

Am Ende der zweiten Förderschnecke 32 ist eine einen Auslauf 44 aufweisende Ausführeinrichtung 45 vorgesehen, über die erwärmte und entgaste Biomasse über eine Rohrleitung 46 zurückgeführt wird. In der Rohrleitung 46 kann ein Absperrorgan 47 angeordnet sein. Die Rohrleitung 46 mündet in einen geschlossenen Behälter 48, so daß die entgaste und entwässerte Biomasse in dem Behälter 48 über eine Entwässerungseinrichtung 49 in eine Portioniervorrichtung 50 gelangt, wo sie takt- und bedarfsweise in die erste Mischeinrichtung 10 eingeschoben wird. Dort gelangt die Biomasse zusammen mit dem Biomüll und dem Rechengut letztlich auf die Schnecke ß und dann weiter zu dem Kompaktierkopf 15.

Über eine Rohrleitung 51 gelangt feinflockiger Belebtschlamm (0,5—1,5%) mit einem Feststoffgehalt von 0,5—1,5% in einen Voreindicker 52, der durch Trennwände mehrfach unterteilt ist und an dessen schräg abwärts gerichtetem Boden ein Transportband 53 für den abgesetzten Klärschlamm vorgesehen ist, der durch einen Trichter 54 mit Absperrorgan 55 in den Mischraum 21 überführt wird. Der Voreindicker 52 weist Skimmrinnen 56, Ablaufrinnen 57 und Tauchwände 58 sowie eine Ablaufrinne 59 auf. Eine Ablaufleitung 60 führt zum Zulauf der Kläranlage, eine Ablaufleitung 61 zu dem Mischraum 21. An den Trichter 54 ist weiterhin eine Zulaufleitung 62 für Frischschlamm mit z.B. 3—8% Feststoffgehalt vorgesehen, so daß je nach den gegebenen Verhältnissen Frischschlamm und Belebtschlamm in den Mischraum 21 gelangen. Die gesamte Einrichtung ist mit einer Isolierung 63 umgeben, um die Wärmeverluste möglichst gering zu halten.

Fig. 3 zeigt den Feinabscheider 1 mit der nachgeordneten ersten Mischeinrichtung 10 in etwas größerem Maßstab. Über einen Motor 64 und einer an einer Zwischenwand 65 aufgehängten Getriebestufe werden einerseits die beiden Mischschnecken 8 angetrieben, andererseits, ebenfalls über eine Getriebestuffe 66 ein Schöpfrad 67 eines Sand- und Sinkstoffabscheiders 68, dessen Wellenstummel 69 ebenfalls in der Zwischenwand 65 gelagert ist. Der Abschlußboden 9 am Ende des Feinabscheiders 1 ist durchbrochen und wird nicht nur von den Mischschnecken 8 durchsetzt, sondern auch von den Siebblechen 13. Weiterhin ist eine Ablaufwanne 70 vorgesehen, mit deren Hilfe durch die Siebbleche 13 hindurchtretendes Wasser zurückgeführt wird.

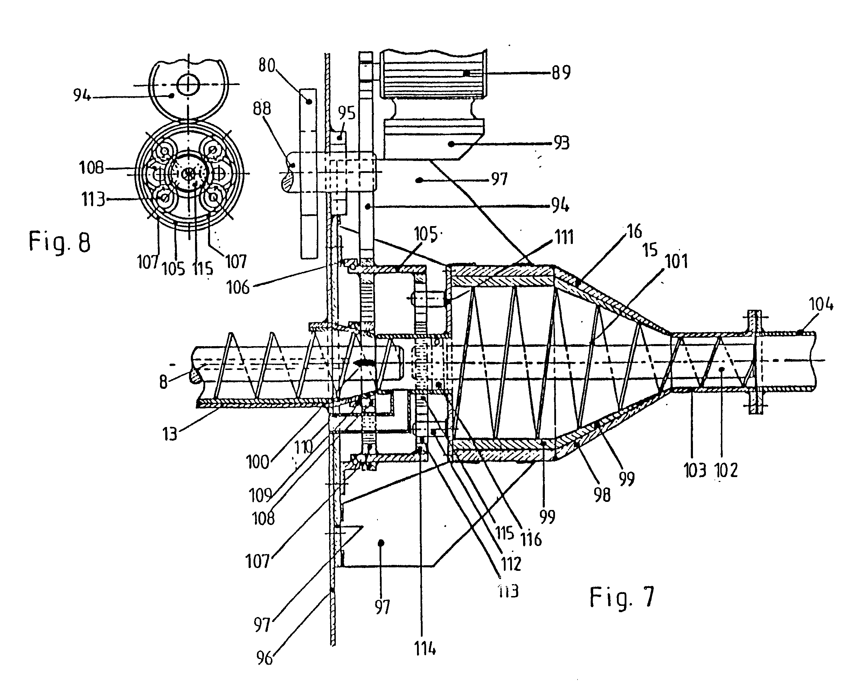

Die erste Mischeinrichtung 10 weist ein Gehäuse auf, welches durch eine Dichtung 71 und einen Deckel 72 oben abgeschlossen ist. Darunter befindet sich eine Wanne 73, die auf einem Teil ihres Umfanges offen ist und uber eine Drehlagerung 74 und einen Motor 75 so geschwenkt werden kann, daß, wie in Fig. 4 dargestellt, bei geöffnetem Deckel 72 Rechengut, Biomüll u. dgl. in die Wanne 73 eingefüllt werden kann. Leitbleche 76 ergänzen den Einwurf. Zu Säuberungszwecken ist eine Reinigungsvorrichtung 77 und ein Abstreifer 78 vorgesehen. Oberhalb der Wanne 73 kann eine Absaugung 79 angeordnet sein. Wenn die Wanne 73 etwa um 180° mit Hilfe des Motors 75 gedreht wird, fällt das in ihr vorhandene Rechengut und der Biomüll, Gartenabfälle uswauf die darunter befindliche Zerkleinerungseinrichtung 12, deren wesentliche Bestandteile auf einer Welle gelagerte Zähne 80 sind, die mit Reihen von Zinken 81, 82, 83 zusammenarbeiten, die auf einer Kreisschale 84 ortsfest gelagert sind. Leitschüttbleche 85, die am Behälter 86 angeordnet sind, ergänzen einander und sorgen dafür, daß das Rechengut und der Biomüll in den Bereich der Zähne 80 und Zinken 81, 82, 83 gelangen. Ein Abstreifer 87 säubert die Zähne 80. Wie Fig. 5 erkennen läßt, sind die Zähne 80 auf einer Welle 88 angeordnet. Die Welle 88 wird über einen Motor 89 (Fig. 7) angetrieben. Wie Fig. 3 erkennen läßt, fällt das zerkleinerte Rechengut und der Biomüll, z.B. Verpackungskartons, Faltschachteln, Garten- und Gemüseabfälle über die Zerkleinerungseinrichtung 12 auf die beiden Mischschnecken 8 bzw. den Teil der beiden- Mischschnecken, der über den Feinabscheider 1 hinaus in den Bereich der ersten Mischeinrichtung 10 verlängert ist. Vorher wurde im Bereich des Feinabscheiders 1 durch den Kamm 7 (Fig. 4), der über einen gesonderten, intermittierend arbeitenden Antrieb verfügt, die Schwimmstoffe abgeschieden und in die beiden Mischschnecken 8 geworfen. Der Kamm 7, der zusätzlich zu seinen Drehstählen mit anderen Abstreifeinrichtungen, aus Gummi u. dgl. besetzt sein kann, ist auf einem Rohr 90 angeordnet, welches mit Hilfe eines Drehlagers 91 geführt und gehalten ist. Überlaufrinnen 92 sind im Anschluß an den äußeren Umfang der Siebtrommel angeordnet. Es sind auch verschieden hohe Wasserstände eingezeichnet, wobei ein Aufstauen von dem niedrigsten Wasserspiegel solange erfolgt, bis der Wasserspiegel um ein bestimmtes Maß gestiegen ist. Dann wird der Kamm 7 in eine Umdrehung versetzt, so daß die Durchtrittsschlitze 5 von dem Kamm 7 gereinigt und das abgesetzte Gut entnommen und in die Mischschnecken 8 geworfen wird. Hierdurch werden die Durchtrittsschlitze 5 freigemacht und der Wasserspiegel sinkt wiederum etwas, worauf erneute Ablagerung von Schwimmstoffen an der Innenwandung der Siebtrommel 2 folgt. Auf diese Art und Weise wiederholt sich das Spiel. Die Überlaufrinnen 92 begrenzen den maximalen Wasserspiegel im Notfall.

Die Fig. 7 und 8 ergänzen einander und zeigen insbes. den Drehantrieb für die Kompaktiereinrichtung 15 und die Zerkleinerungseinrichtung 12. Der Motor 89 ist auf einer Konsole 93 angeordnet und treibt über ein Ritzel ein Zahnrad 94 an, welches auf der Welle 88 der Zerkleinerungseinrichtung 12 sitzt und in einem Lager 95 gelagert ist. An der Behälterwandung 96 ist über Stegbleche 97 der Kompaktierkopf 15 aufgehängt, der eine konische Gehäusewandung 98 aufweist, die auf ihrer Innenseite mit Scher- und Führungsleisten 99 besetzt ist. Am Ende der Mischschnecken 8 sind Stege 100 in einem konischen Teil angeordnet, so daß hier bereits eine erste Pfropfbildung und damit Entwässerung der Mischmasse stattfindet. Aus diesem Teil tritt dann die Mischmasse in den Kompaktierkopf 15 über, der im wesentlichen aus zwei zylindrischen Abständen mit einem dazwischengeschalteten konischen Abschnitt besteht. Es ist eine entsprechend ausgebildete Kompaktierschnecke 101 vorgesehen, die auf einer Welle 102 gelagert ist und über diese Welle angetrieben wird. Die konische Gehäusewandung 98 wird durch ein zylindrisches Stück 103 ergänzt, an die ein Austragsrohr 104 an schließt, welches mit Hilfe eines nicht dargestellten Knickstückes Anschluß an den Durchtrittsraum 25 der ersten Förderschnecke 23 hat.

Das Zahnrad 94 treibt nicht nur die Zerkleinerungseinrichtung 12 an, sondern auch den Kompaktierkopf 15. Dies geschieht mit Hilfe eines Rohrstückes 105, welches in einem Drehlager 106 an der Behälterwandung 96 gelagert ist. Das Rohrstück 105 trägt innen und außen Zahnkränze 107, wovon der innere Zahnkranz 107 mit zwei Zahnrädern 108 zusammenarbeitet, die die Mischschnecken 8 umgeben und diese antreiben. Ein Lager 109 dient der Lagerung der Mischschnecken 8. Eine Leitung 110 dient dazu,

ausgepreßtes Wasser zurückzuführen, welches über die Ablaufwanne 70 in das Innere des Feinabscheiders 1 zurückfließen kanna. Die schon vorverdichtete Mischmasse tritt an dieser Stelle in den Kompaktierkopf 15 über. Dieser ist stirnseitig ansonsten mit einer Wandung 111 abgeschlossen, mit der Bolzen 112 drehfest verbunden sind, auf denen wiederum Antriebsräder 113 gelagert sind, die einerseits mit einem Zahnkranz 114 zusammenarbeiten und andererseits ein Zahnrad 115 antreiben, welches neben einem Lager 116 für die Welle 102 des Kompaktierkopfes 15 vorgesehen ist. Es sind insgesamt z.B. 4 Antriebsräder 113 in der aus Fig. 8 ersichtlichen Weise angeordnet.

Die Funktion und Wirkungsweise der Vorrichtung ist aus der vorangehenden Beschreibung ersichtlich. Es sei lediglich noch einmal wiederholt, daß die Schwimmstoffe in dem Feinabscheider 1 abgeschieden werden. Diesen wird in der ersten Mischeinrichtung 10 Rechengut, zerkleinerter Biomüll und rückgeführte Biomasse hinzugefügt. Dabei entsteht im Kompaktierkopf 15 die sog. Mischmasse. Die Mischmasse wird aufgeteilt. Ein Teil gelangt über den Rohranschluß 20 in den Mischraum 21 und wird dort mit Klärschlamm gemischt. Die Mischung aus Mischmasse und Klärschlamm wird Biomasse genannt. Diese Biomasse wird in der Doppelmantelschnecke von der zweiten Förderschnecke 32 erfaßt und gefördert. Die Biomasse wird über die Ausführeinrichtung 45 herausgenommen und über die Rohrleitung 46 zurückgeführt und gelangt auf diese Art und Weise in die erste Mischeinrichtung 10. Der andere Teil der Mischmasse wird in die erste Förderschnecke 23 eingegeben, deren Durchtrittsraum 25 den Kompostierraum bildet, so daß am Ende über den Trichter 28 und die Sacketiereinrichtung 29 der fertige Kompost abgezogen werden kann.

Bezugszeichenliste:

1 = Feinabscheider
2 = Siebtrommel
3 = Gewinde
4 = Nuten
5 = Durchtrittsschlitze
6 = Pfeil
7 = Kamm
8 = Mischschnecke
9 = Abschlußboden
10 = erste Mischeinrichtung
11 = Preßeinrichtung
12 = Zerkleinerungseinrichtung
13 = Siebbleche
14 = Scher- und Führungsleisten
15 = Kompaktierkopf
16 = Gehäuse
17 = Behälter
18 = Absperrorgan
19 = Absperrorgan
20 = Rohranschluß
21 = Mischraum
22 = Rühreinrichtung
23 = erste Förderschnecke
24 = Rohrmantel
25 = Durchtrittsraum
26 = Durchtrittsraum
27 = Rüttelsieb
28 = Trichter
29 = Sacketiereinrichtung
30 = Trichter
31 = Auslauf
32 = zweite Förderschnecke
33 = Rohrmantel
34 = Durchtrittsraum
35 = Durchtrittsraum
36 = Isolierung
37 = Fahrwerk
38 = Gelände
39 = Drehlager
40 = Lagerschale
41 = Hubeinrichtung
42 = Zahnkranz
43 = Scher- und Führungsleisten
44 = Auslauf

6

45 = Ausführeinrichtung
46 = Rohrleitung
47 = Absperrorgan
48 = Behälter
49 = Entwässerungseinrichtung
50 = Portioniervorrichtung
51 = Rohrleitung
52 = Voreindicker
53 = Transportband
54 = Trichter
55 = Absperrorgan
56 = Skimmrinne
57 = Ablaufrinne
58 = Tauchwand
59 = Ablaufrinne
60 = Ablaufleitung
61 = Ablaufleitung
62 = Zulaufleitung
63 = Isolierung
64 = Motor
65 = Zwischenwand
66 = Getriebestufe
67 = Schöpfrad
68 = Sand- und Sinkstoffabscheider
69 = Wellenstummel
70 = Ablaufwanne
71 = Dichtung
72 = Deckel
73 = Wanne
74 = Drehlagerung
75 = Motor
76 = Leitbleche
77 = Reinigungsvorrichtung
78 = Abstreifer
79 = Absaugung
80 = Zähne
81 = Zinken
82 = Zinken
83 = Zinken
84 = Kreisschale
85 = Leitschüttblech
86 = Behälter
87 = Abstreifer
88 = Welle
89 = Motor
90 = Rohr
91 = Drehlager
92 = Überlaufrinne
93 = Konsole
94 = Zahnrad
95 = Lager
96 = Behälterwandung
97 = Stegblech
98 = konische Gehäusewandung
99 = Scher- und Führungsleisten
100 = Stege
101 = Kompaktierschnecke
102 = Welle
103 = Stück
104 = Austragsrohr
105 = Rohrstück
106 = Drehlager
107 = Zahnkranz
108 = Zahnrad
109 = Lager

110 = Leitung
111 = Wandung
112 = Bolzen
113 = Antriebsrad
114 = Zahnkranz
115 = Zahnrad
116 = Lager

Schwimmstoffe
Rechengut          Biomüll          Klärschlamm

| 1.1 Bunkerung | 1.2 Bunkerung |

rückgeführte Biomasse

| 2.1 Feinabscheidung |
| 2.2 Entwässerung |   | 2.3 Zerkleinerung |

| 3.1 Mischung |
| 3.2 Entwässerung |
| 3.3 Verdichtung |
| 3.4 Aufteilung |

Mischmasse

| 4.1 Rührmischung |
| 4.2 Förder-Durchmischung |
| (Schnecke 32) |
| 4.3 Erwärmung |
| 4.4 Verdichtung |
| 4.5 Zerkleinerung |
| 4.6 Entwässerung |

Biomasse

Luft  | 5.1 Verrottung |
| 5.2 Belüftung |
| 5.3 Förder-Durchmischung |
| (Schnecke 23) |
| 5.4 Erwärmung |
| 5.5 Verdichtung |
| 5.6 Zerkleinerung |
| 5.7 Entwässerung |

KOMPOST

**Patentansprüche**

1. Verfahren zur Entsorgung und Verwertung von Rechengut, Schwimmstoffen aus Gerinnen und Klärschlamm aus Absetzbecken und Belüftungsbecken von Kläranlagen einerseits und Biomüll von Haushalt, Industrie usw. andererseits und zur Erzeugung von Kompost, dadurch gekennzeichnet, daß die Schwimmstoffe feinabgeschieden werden, daß der Biomüll sowie rückgeführte Biomasse und Rechengut den abgeschiedenen Schwimmstoffen zugeführt werden, daß die so gebildete Mischmasse zerkleinert, kompaktiert und dabei entwässert wird, daß einem Teil der kompaktierten Mischmasse der Klärschlamm hinzugefügt wird und so die rückzuführende Biomasse gebildet wird, und daß der andere Teil der Mischmasse unter Förder-Durchmischung in den Kompost überführt wird.

2. Verfahren nach Anspruch 1, dadurch gekennzeichnet, daß die Biomasse zunächst auf etwa 75°C. erwärmt und dabei entwässert wird, bevor sie mit dem Rechengut und dem zerkleinerten Biomüll gemischt wird.

3. Verfahren nach Anspruch 1 und 2, dadurch gekennzeichnet, daß die rückgeführte Biomasse zusammen mit Rechengut, den Schwimmstoffen und Biomüll auf etwa 50% Feststoffanteil kompaktiert wird.

4. Verfahren nach Anspruch 1 bis 3, dadurch gekennzeichnet, daß die kompaktierte Mischmasse im Kompostierraum auf 75°C. erwärmt wird.

5. Anlage zur Durchführung des Verfahrens nach Anspruch 1 bis 4, mit einem Rechen zum Abscheiden von Rechengut und einem Voreindicker für Klärschlamm, bei der ein Feinabscheider (1) für Schwimmstoffe, eine erste Misch- und Zerkleinerungseinrichtung (10) für Rechengut, die abgeschiedenen Schwimmstoffe, Biomüll und rückgeführte Biomasse, eine Kompaktiereinrichtung (15, 16) für die so gebildete Mischmasse, eine zweite Mischeinrichtung (21) für einen Teil der Mischmasse aus der Kompaktiereinrichtung mit Klärschlamm, eine der zweiten Mischeinrichtung (21) nachgeschaltete Förderschnecke (32) zur Erzeugung der Biomasse und eine der Kompaktiereinrichtung (15, 16) nachgeschaltete Förderschnecke (23) für die Verrottung der Mischmasse zu Kompost vorgesehen sind.

6. Anlage nach Anspruch 5, dadurch gekennzeichnet, daß der Feinabscheider (1) eine trommelartige Siebwand (2) aufweist, die auf der Außenseite ein Gewinde (3) und auf der Innenseite umlaufende Nuten (4) oder umgekehrt trägt, die sich radial zur Bildung von Durchtrittsschlitzen (5) überlappen.

7. Anlage nach Anspruch 6, dadurch gekennzeichnet, daß in den Nuten (4) oder dem Gewinde (3) ein umlaufend angetriebener Kamm (7) vorgesehen ist, der die bei der Herstellung der Nuten bzw. des Gewindes eingesetzten Drehstähle aufweist.

8. Anlage nach Anspruch 6 und 7, dadurch gekennzeichnet, daß bei Anordnung des Kamms (7) im Gewinde (3) dieser axial beweglich geführt ist.

9. Anlage nach Anspruch 6, dadurch gekennzeichnet, daß die Nuten (4) gestuft ausgebildet sind, und daß der Antrieb des Kamms (7) intermittierend erfolgt.

10. Anlage nach Anspruch 5 und 6, dadurch gekennzeichnet, daß in dem Feinabscheider (1) eine Mischschnecke (8) vorgesehen ist, die über die axiale Länge des Feinabscheiders (1) hinaus verlängert ist und als Kompaktiereinrichtung in einem konischen Kompaktierkopf (15) endet, und daß im Bereich des verlängerten Teils eine Aufgabeeinrichtung (10) für Rechengut, Biomüll und rückgeführte Biomasse vorgesehen ist.

11. Anlage nach Anspruch 10, dadurch gekennzeichnet, daß dem Kompaktierkopf (15) eine schräg ansteigend angeordnete Förderschnecke (23) als Kompostiereinrichtung nach geschaltet ist, die mit einer Einrichtung zum Einbringen von Luft versehen ist.

12. Anlage nach Anspruch 10, dadurch gekennzeichnet, daß die Förderschnecke (23, 32) als Doppelmantelschnecke vorgesehen ist, deren eine Förderstrecke für die Entgasung und Erwärmung des Klärschlamms vermischt mit Mischmasse und deren zweite Förderstrecke als Kompostiereinrichtung für die Mischmasse ausgebildet ist.

13. Anlage nach Anspruch 12, dadurch gekennzeichnet, daß die Doppelmantelschnecke jeweils einen zweigängigen Schneckengang aufweist, deren zweiter Durchtrittsraum (26, 35) von einem Wärmeträgermedium durchflossen ist.

14. Anlage nach Anspruch 12, dadurch gekennzeichnet, daß am Ende der ersten Förderstrecke für den Klärschlamm vermischt mit Mischmasse eine Ausführeinrichtung (45) für die Rückführung der Biomasse zu der verlängerten Mischschnecke (8) vorgesehen ist.

**Revendications**

1. Procédé pour la récupération et la valorisation des boues d'épuration, des substances flottantes de floculation et des boues de décantation venant des bassins de décantation et de clarification des installations d'épuration, d'une part, et des bio-déchets ménagers, industriels et autres, d'autre part, ainsi que pour la production de compost, caractérisé en ce que les substances flottantes sont finement séparées, en ce que les bio-déchets ainsi que la biomasse recyclée et les boues d'épuration sont ajoutées aux substances flottantes séparées, en ce que la masse mélangée ainsi formée est déchiquetée, compactée et de ce fait déshydratée, en ce que la boue de décantation est ajoutée à une partie de la masse mélangée compactée en formant ainsi la biomasse à recycler, et en ce que l'autre partie de la masse mélangée est incorporée au compost par transport avec mélange intime.

2. Procédé selon la revendication 1, caractérisé en ce que la biomasse est tout d'abord chauffée à environ 75°C. et est ainsi déshydratée, avant d'être mélangée avec les boues d'épuration et avec les bio-déchets déchiquetés.

3. Procédé selon la revendication 1, caractérisé en ce que la biomasse recyclée est compactée conjointement avec les boues d'épuration, les substances flottantes et les bio-déchets jusqu'à une teneur en solides d'environ 50%.

4. Procédé selon les revendications 1 à 3, caractérisé en ce que la masse mélangée compactée est chauffée à environ 75°C. dans l'espace où a lieu la transformation en compost.

5. Installation pour la mise en oeuvre du procédé selon les revendications 1 à 4, avec un râteau pour la séparation des boues d'épuration et un pré-épaississeur des boues de décantation, dans laquelle sont prévus:

un séparateur fin (1) pour les substances flottantes;

un premier dispositif mélangeur et déchiqueteur (10) pour les boues d'épuration, les substances flottantes séparées, les bio-déchets et la biomasse recyclée;

un dispositif compacteur (15, 16) pour la masse mélangée ainsi formée;

un deuxième dispositif mélangeur (21) pour mélanger une partie de la masse mélangée venant du dispositif compacteur avec la boue de décantation;

une vis transporteuse (32) disposée à la suite du deuxième dispositif mélangeur (21) pour produire la biomasse; et

une vis transporteuse (23) disposée à la suite du dispositif compacteur (15, 16) pour la décomposition de la masse mélangée et sa transformation en compost.

6. Installation selon la revendication 5, caractérisée en ce que le séparateur fin (1) présente une paroi filtrante (2) en forme de tambour portant sur sa face extérieure un filetage (3) et sur sa face interne des gorges périphériques (4), ou inversement, se recouvrant mutuellement radialement pour former des fentes de passage (5).

7. Installation selon la revendication 6, caractérisée en ce qu'un peigne (7) entraîné en rotation est prévu dans les gorges (4) ou dans le filetage (3), ce peigne présentant des dents constituées par les outils de tour ayant servi à l'usinage des gorges et/ou du filetage.

8. Installation selon les revendications 6 et 7, caractérisée en ce que lors de la mise en place du peigne (7) dans le filetage (3), celui-ci est guidé axialement de manière mobile.

9. Installation selon la revendication 6, caractérisée en ce que les gorges (4) sont échelonnées en gradins et en ce que l'entraînement du peigne (7) est intermittent.

10. Installation selon les revendications 5 et 6, caractérisée en ce qu'une vis mélangeuse (8) est prévue dans le séparateur fin (1), cette vis se prolongeant au delà de la longueur axiale du séparateur fin (1) et se terminant sous la forme d'un dispositif compacteur en une tête compacteuse conique (15), et en ce que dans la région du prolongement il est prévu un dispositif d'alimentation (10) pour les boues d'épuration, les bio-déchets et la biomasse recyclée.

11. Installation selon la revendication 10, caractérisée en ce qu'une vis transporteuse (23) ascendante obliquement est disposée, en tant que dispositif pour la production de compost, à la suite de la tête compacteuse (15), cette vis étant munie d'un dispositif pour l'introduction d'air.

12. Installation selon la revendication 10, caractérisée en ce que la vis transporteuse (23, 32) est prévue sous la forme d'une vis à double paroi, dont une section de transport est agencée pour le dégazage et le réchauffage de la boue de décantation mélangée à la masse mélangée, tandis que la deuxième section de transport est agencée comme dispositif pour transformer la masse mélangée en compost.

13. Installation selon la revendication 12, caractérisée en ce que la vis à double paroi présente chaque fois un filetage à deux pas dont le deuxième espace de passage (26, 35) est parcouru par un agent vecteur de chaleur.

14. Installation selon la revendication 12, caractérisée en ce qu'il est prévu, sur l'extrémité de la première section de transport pour la boue de décantation mélangée à la masse mélangée, un dispositif évacuateur (45) pour le recyclage de la biomasse vers le prolongement de la vis mélangeuse (8).

**Claims**

1. Process for disposing of and utilizing screenings, floating matter from drainage channels and sewage sludge from settling tanks and aeration tanks of sewage treatment plants, on the one hand, and domestic, industrial refuse etc., on the other, and for producing compost, characterized in that the floating matter is separated as fine material, in that the biological refuse and also returned biomass and screenings are added to the deposited faulting matter, in that the mixed material thus formed is comminuted, compacted and at the same time dewatered, in that the sewage sludge is added to one part of the compacted mixed material and the biomass to be returned is thus formed, and in that the other part of the mixed material is converted into the compost with conveyor-type mixing.

2. Process according to Claim 1, characterized in that the biomass is first heated to about 75°C and dewatered in the process before it is mixed with the screenings and the comminuted biological refuse.

11

3. Process according to Claim 1 and 2, characterized in that the returned biomass is compacted together with screenings, the floating matter and the biological refuse until the solid matter component is about 50%.

4. Process according to Claim 1 to 3, characterized in that the compacted mixed material is heated to 75°C in the composting chamber.

5. Plant for carrying out the process according to Claim 1 to 4, having a screen for separating screenings and a preliminary densifier for sewage sludge, in which plant a fine material separator (1) for floating matter, a first mixing and comminuting device (10) for screenings, the separated floating matter, biological refuse, a compacting device (15, 16) for the mixed material formed, a second mixing device (21) for mixing one part of the mixed material from the compacting device with sewage sludge, a worm conveyor (32) downstream of the second mixing device (21) for producing the biomass and a worm conveyor (23) downstream of the compacting device (15, 16) for rotting the mixed material to form compost are provided.

6. Plant according to Claim 5, characterized in that the fine material separator (1) has a drum-like screening wall (2) which carries a thread (3) on the outside and circumferential grooves (4) on the inside or vice versa which overlap radially to form passage slots (5).

7. Plant according to Claim 6, characterized in that a circumferentially driven comb (7) is provided in the grooves (4) or the thread (3), which comb incorporates the turning steels used in producing the grooves or the thread.

8. Plant according to Claim 6 and 7, characterized in that, in the arrangement of the comb (7) in the thread (3), the latter is conveyed in an axially mobile manner.

9. Plant according to Claim 6, characterized in that the grooves (4) are of graded construction and that the comb (7) is driven intermittently.

10. Plant according to Claim 5 and 6, characterized in that there is provided in the fine material separator (1) a mixing worm (8) which is extended over the axial length of the fine material separator (1) and terminates in a conical compacting head (15) as a compacting device, and in that a feeder device (10) for screenings, biological refuse and returned biomass is provided in the region of the extended part.

11. Plant according to Claim 10, characterized in that a worm conveyor (23) arranged to rise at an angle is connected downstream of the compacting head (15) as a composting device which is provided with a device for introducing air.

12. Plant according to Claim 10, characterized in that the worm conveyor (23, 32) is provided as the double-casing worm whose one conveyance track is constructed for degassing and heating the sewage sludge mixed with mixed material and whose second conveyance track is constructed as a composting device for the mixed material.

13. Plant according to Claim 12, characterized in that the double-casing worm in each case has a double-thread worm thread through whose second passage room (26, 35) a heat transfer medium flows.

14. Plant according to Claim 12, characterized in that a discharge device (45) for returning the biomass to the extended mixing worm (8) is provided at the end of the first conveyance track for the sewage sludge mixed with mixed material.

EP 0 181 615 B1

Fig.1

Fig. 2

Fig. 3

Fig. 5

Fig. 6

Fig. 4

Fig. 8

Fig. 7

EP 0 181 615 B1